# EUROPÄISCHE PATENTSCHRIFT

(11) **EP 2 865 995 B1**
(45) Veröffentlichungstag und Bekanntmachung des Hinweises auf die Patenterteilung: **08.08.2018**
(21) Anmeldenummer: 14181217.2
(22) Anmeldetag: 18.08.2014
(51) Int. Cl.: G01C 21/36, G09B 29/10

(54) **ANSTEUEREINRICHTUNG UND VERFAHREN ZUM ANZEIGEN EINER RICHTUNGS- UND ENTFERNUNGSANZEIGE**
CONTROL DEVICE AND METHOD FOR DISPLAYING A DIRECTION AND DISTANCE DISPLAY
DISPOSITIF DE COMMANDE ET PROCÉDÉ D'AFFICHAGE D'UN AFFICHAGE DE DISTANCE OU DE DIRECTION

(30) Priorität: 24.10.2013 DE 102013221629
(43) Veröffentlichungstag der Anmeldung: 29.04.2015
(73) Patentinhaber: Volkswagen Aktiengesellschaft, 38440 Wolfsburg (DE)
(72) Erfinder: CHUDZINSKI, Filip Piotr, 10557 Berlin (DE)

(56) Entgegenhaltungen:
- EP-A1- 1 442 271
- JP-A- 2000 241 175

## Beschreibung

Ausführungsbeispiele beziehen sich auf eine Ansteuereinrichtung für eine Richtungs- und Entfernungsanzeige auf einer Anzeigefläche, auf eine Vorrichtung mit der Ansteuereinrichtung, auf ein Verfahren zum Anzeigen einer Richtungs- und Entfernungsanzeige auf einer Anzeigefläche sowie auf ein Computerprogramm zur Durchführung des Verfahrens.

Bei vielen konventionellen Navigationsgeräten, Routenplanern oder dergleichen werden einem Nutzer sogenannte Points of Interest (von Englisch: "interessantes Ziel") vorgeschlagen. Oft können diese Ziele von anderen Benutzern vorgeschlagen oder kommentiert werden. Points of Interest, also mögliche Ziele, werden einem Benutzer meist mit einem Bezug zu einem Standpunkt des Benutzers vorgeschlagen. Viele der konventionellen Navigationssysteme oder Routenplaner können eine Route zu einem Point of Interest von einem Standpunkt aus vorschlagen.

Beispielsweise kann es für einen Benutzer schwierig sein abzuschätzen, wie weit die Ziele von seinem aktuellen Standpunkt entfernt sind bzw. wie lange er braucht, um das Ziel zu erreichen. Des weiterem kann ein Zusammenhang darüber fehlen, wo ein vorgeschlagenes Ziel im Vergleich zu weiteren anderen möglichen vorgeschlagenen Zielen in einer Umgebung liegt. Dies kann beispielsweise dazu führen, dass sich ein Benutzer für jedes mögliche Ziel einen Routenvorschlag unterbreiten lassen muss. Dies könnte insbesondere dann aufwändig sein, wenn sich der Benutzer in einem Fahrzeug befindet und sich eigentlich auf den Verkehr und die Fahrsituation konzentrieren soll. Beispielsweise betreffen die JP 2000 241175 A die EP 1 442 271 A1 Navigationssysteme bei denen eine Entfernung zu einem Ziel über eine Länge eines Pfeils, der auf das Ziel zeigt, illustriert werden soll.

Es besteht daher ein Bedarf daran ein Konzept für eine Richtungs- und Entfernungsanzeige bereitzustellen, die für einen Benutzer schneller erfassbar ist.

Diesem Bedarf tragen eine Ansteuereinrichtung, eine Vorrichtung, ein Verfahren und ein Computerprogramm nach den unabhängigen Ansprüchen Rechnung.

Ausführungsbeispiele betreffen eine Ansteuereinrichtung für eine Richtungs- und Entfernungsanzeige auf einer Anzeigefläche. Die Ansteuereinrichtung umfasst eine Eingangseinrichtung. Die Eingangseinrichtung ist ausgebildet, um ein Eingangssignal mit einer Information zu einer Entfernung und einer Richtung zu einem Ziel zu empfangen. Ferner besitzt die Ansteuereinrichtung einen Controller. Der Controller ist ausgebildet, um ein Anzeigesignal zu erzeugen. Das Anzeigesignal bewirkt eine Darstellung eines einen Winkelbereich überdeckenden Bogenabschnitts auf der Anzeigefläche. Eine Größe des Winkelbereichs korrespondiert dabei zu der Information über die Entfernung. Eine Position einer Mittelachse des Winkelbereichs korrespondiert zu der Information über die Richtung des Ziels.

Dadurch, dass ein Bogenabschnitt wiedergegeben wird, der einen Winkelbereich überdeckt, dessen Größe zu einer Information über die Entfernung und die Position der Mittelachse zu der Information über die Richtung des Ziels korrespondiert, kann bei manchen Ausführungsbeispielen ermöglicht werden, dass der Benutzer sehr schnell, auf einfache Art und Weise sehen kann, in welcher Richtung und in welcher Entfernung sein Ziel liegt.

Eine Entfernung kann beispielsweise jedwede Angabe sein, die ermöglicht, dass der Benutzer abschätzen kann, wie lang es dauern wird, bis er das Ziel erreicht. Die Entfernung kann evtl. von einem Startpunkt aus bis zu dem Ziel angegeben sein. Beispielsweise kann es sich bei dem Startpunkt um einen aktuellen Standpunkt oder einen gewählten Standpunkt eines Benutzers handeln. Unter Umständen kann eine Information zu der Entfernung und eine Information zu der Richtung jedwede Art von Information sein, aus der sich die Richtung und die Entfernung des Ziels ermitteln lässt. Die Information kann beispielsweise eine Position des Ziels sein.

Der Bogenabschnitt kann beispielsweise alle möglichen Formen aufweisen. Die Form des Bogenabschnitts kann z.B. als Kreisbogenabschnitt oder Ellipsenbogenabschnitt ausgebildet sein.

Die Größe des Winkelbereichs kann zu der Information über die Entfernung des Ziels auf jedwede Art und Weise korrespondieren. So können die Größe des Winkelbereichs und die Information über die Entfernung des Ziels ggf. so zueinander korrespondieren, dass ein Benutzer mit einem Blick abschätzen kann, ob es sich dabei um eine große oder kleine Entfernung handelt. Beispielsweise soll der Benutzer intuitiv erkennen können, wie weit das Ziel entfernt ist. Der Benutzer kann bei manchen Ausführungsbeispielen diese Fähigkeit durch das Betrachten einer Mehrzahl von solchen Entfernungs- und Richtungsanzeigen bzw. den Vergleich solcher Entfernungs- und Richtungsanzeigen erhalten.

Eine Mittelachse des Winkelbereichs bzw. eine Position der Mittelachse des Winkelbereichs kann zu der Information über die Richtung auf jedwede Art und Weise korrespondieren. Beispielsweise kann die Position der Mittelachse des Winkelbereichs zu der Information über die Richtung des Ziels so korrespondieren, dass die Mittelachse in eine Richtung zeigt, in die sich der Benutzer von seinem aktuellen oder gewählten Standpunkt aus bewegen muss, um zu dem Ziel zu gelangen.

Als Anzeigefläche kann jedwede Art von Anzeigefläche verwendet werden. Beispielsweise kann die Anzeigefläche ein Touchscreen, ein Display o.ä. sein. Signale können dabei ggf. einen binäre, analogen, digitalen oder elektrischen Wert repräsentieren oder eine Information, die durch einen Wert repräsentiert ist. Eine Eingangseinrichtung kann jede Art von Einrichtung sein, die ausgebildet ist, um zumindest eines der genannten Signale zu empfangen. Beispielsweise kann die Eingangseinrichtung eine Schnittstelle, ein Kontakt, ein Register oder etc. sein. Ein Controller kann jedwede Einrichtung sein, die ausgebildet ist, um zumindest eines der genannten Signale zu verarbeiten. Unter Umständen kann der Controller ein Prozessor, ein digitaler Signalprozessor, ein Hauptprozessor (CPU vom engl.: "Central Processing Unit"), einem Multizweckprozessor (MPP von engl.: "Multi Purpose Prozessor") oder etc. sein.

Bei einigen weiteren Ausführungsbeispielen ist der Controller ausgebildet, um die Größe des Winkelbereichs aus der Information über die Entfernung zu berechnen. So könnte beispielsweise bewirkt werden, dass alle möglichen Entfernungen auf einem begrenzten Winkelbereich von 180° dargestellt werden können. Der Winkelbereich kann eventuell auf 180° begrenzt sein, weil beispielsweise mit einem Winkelbereich, der größer als 180°, ist keine eindeutige Richtungsangabe mehr ermöglicht werden könnte.

Bei einigen weiteren Ausführungsbeispielen ist die Information zu der Entfernung eine Zeitdauer. So kann bei manchen Ausführungsbeispielen ermöglicht werden, dass der Benutzer eine Entfernung zu unterschiedlichen Zielen auf einfache Art und Weise vergleichen kann. Dies kann beispielsweise dann der Fall sein, wenn der Benutzer ein Verkehrsmittel zum Zurücklegen gewählt hat.

Bei einigen weiteren Ausführungsbeispielen ist die Information zu der Entfernung eine Strecke. So kann der Benutzer bei manchen Ausführungsbeispielen auf einfache Art und Weise eine Information darüber erhalten, wie aufwändig es ist, das Ziel zu erreichen. Diese Information könnte einen Benutzer beispielsweise bei der Wahl eines geeigneten Verkehrsmittels unterstützen.

Bei einigen weiteren Ausführungsbeispielen ist der Controller ausgebildet, um eine Position der Mittelachse aus einer Information über die Richtung des Ziels zu berechnen. So kann der Benutzer bei manchen Ausführungsbeispielen auf einfache Art und Weise einen Überblick zu der Richtung des Ziels erhalten.

Bei einigen weiteren Ausführungsbeispielen ist der Controller ausgebildet, um das Anzeigesignal so zu erzeugen, dass der Winkelbereich bei einer ersten Entfernung, kleiner ist als bei einer zweiten Entfernung, die größer ist als die erste Entfernung. Dadurch kann bei manchen Ausführungsbeispielen ermöglicht werden, dass der Bogenabschnitt bei einem Ziel mit einer größeren Entfernung einen größeren Winkelbereich überdeckt. Ferner kann der Bogenabschnitt bei einer kleineren Entfernung einen kleineren Winkelbereich überdecken. Dadurch kann bei manchen Ausführungsbeispielen ermöglicht werden, dass die Richtungsangabe genauer wird, wenn sich das Ziel in einer geringeren Entfernung von dem Benutzer befindet. Dies könnte möglich sein, weil die Mittelachse bei einer kleineren Entfernung in einem kleineren Winkelbereich angeordnet ist. So könnte der Benutzer wenn er näher an einem Ziel ist, eine bessere Information über die einzuschlagende Richtung erhalten.

Bei einigen weiteren Ausführungsbeispielen ist der Controller ausgebildet, um das Anzeigesignal so zu erzeugen, dass sich eine Größe des Winkelbereichs linear zu einer Entfernung verhält. Bei manchen Ausführungsbeispielen kann so ermöglicht werden, dass ein Benutzer einen guten Überblick über eine Entfernung erhält. Dabei kann eine maximale Entfernung zu einem Winkel von 180° korrespondieren.

Bei einigen weiteren Ausführungsbeispielen ist der Controller ausgebildet, um das Anzeigesignal so zu erzeugen, dass eine Mehrzahl von Entfernungen, die in einem Wertebereich liegen, zu einem Winkelbereich bzw. einem Winkel des Winkelbereichs korrespondiert. So kann bei manchen Ausführungsbeispielen ermöglicht werden, dass eine größere Anzahl an Entfernungen angezeigt wird. Es kann bei manchen Ausführungsbeispielen dadurch vermieden werden, dass eine maximale Entfernung festgelegt wird, zu der der Winkelbereich von 180° korrespondiert. Beispielsweise können alle Entfernungen die über einer gewissen Grenze liegen, mit einem bestimmten Winkelbereich angezeigt werden. Eine Entfernung, beispielsweise über vier Stunden oder über 400 km, kann mit dem gleichen Winkelbereich angezeigt werden, wie eine noch größere Entfernung. Dieser Winkelbereich kann evtl. einen Winkel zwischen 170° und 180° einschließen. Dadurch könnte dem Benutzer auf einfache Art und Weise ein Verhältnis von Entfernungen mitgeteilt werden.

Bei einigen weiteren Ausführungsbeispielen ist der Controller ausgebildet, um das Anzeigesignal so zu erzeugen, dass der Bogenabschnitt auf einem Hintergrund angezeigt wird, von dem sich der Bogenabschnitt abhebt. So kann bei manchen Ausführungsbeispielen ermöglicht werden, dass der Bogenabschnitt für den Benutzer gut erkennbar ist.

Bei einigen weiteren Ausführungsbeispielen ist der Controller ausgebildet, um das Anzeigesignal so zu erzeugen, dass der Hintergrund in dem Winkelbereich, den der Bogenabschnitt überdeckt, zumindest teilweise anders dargestellt ist als außerhalb des Winkelbereichs. Bei manchen Ausführungsbeispielen kann so ermöglicht werden, dass der Bogenabschnitt bzw. der Winkelbereich besser erkennbar ist. Beispielsweise können sich ein Kontrast, eine Transparenz und/oder eine Helligkeit der Bereiche unterscheiden.

Bei einigen weiteren Ausführungsbeispielen ist der Controller ausgebildet, um das Anzeigesignal so zu erzeugen, dass der Bogenabschnitt konzentrisch zu einem äußeren Rand des Hintergrunds angeordnet ist. Bei manchen Ausführungsbeispielen kann dadurch ein optisch ansprechendes Bild der Richtungs- und Entfernungsanzeige ermöglicht werden. Bei dem Bogenabschnitt kann es sich ggf. um einen Kreisbogenabschnitt oder einen Ellipsenbogenabschnitt handeln. Ein Kartenausschnitt kann auf jedwede Art und Weise wiedergegeben werden. Beispielsweise kann der Kartenausschnitt als Landkarte, Satellitendarstellung, 3D-Darstellung wiedergegeben werden.

Bei einigen weiteren Ausführungsbeispielen ist der Controller ausgebildet, um das Anzeigesignal so zu erzeugen, dass eine weitere Information zu dem Ziel angezeigt wird. Beispielsweise kann der Benutzer bei manchen Ausführungsbeispielen so mit einem Blick auf die Richtungs- und Entfernungsanzeige erfassen, um welches Ziel oder um welche Art von Ziel es sich handelt. Beispielsweise kann die Information, die zu dem Ziel korrespondiert, an einem Mittelpunkt des Kreisbogens angezeigt werden. So könnte ggf. ein optisch attraktives Erscheinungsbild der Richtungsanzeige ermöglicht werden.

Bei einigen weiteren Ausführungsbeispielen ist der Controller ausgebildet, um das Anzeigesignal so zu erzeugen, dass der Bogenabschnitt vor einem Kartenausschnitt als Hintergrund angezeigt wird. Beispielsweise kann das Ziel oder ein Standort eines Benutzers in dem Kartenausschnitt oder- abschnitt liegen. So kann bei manchen Ausführungsbeispielen der Benutzer einen guten Überblick erhalten, wo sich das Ziel in einem Vergleich zu seinem Standort befindet.

Bei einigen weiteren Ausführungsbeispielen ist der Controller ausgebildet, um das Anzeigesignal so zu erzeugen, dass die Entfernung auch als diskreter Wert, beispielsweise Zeit oder Kilometer angezeigt wird. So kann bei manchen Ausführungsbeispielen ein intuitives Benutzen oder Erkennen der Richtungs- und Entfernungsanzeige vereinfacht werden. Beispielsweise kann der Benutzer bei einigen Ausführungsbeispielen so eine Größe des Winkelbereichs in eine Relation zu der Entfernung setzen. Dadurch könnte ein Lernprozess eines Benutzers mit der Richtung- und Entfernungsanzeige umzugehen, unterstützt bzw. beschleunigt werden.

Bei einigen weiteren Ausführungsbeispielen ist der Controller ausgebildet ist, um das Anzeigesignal so zu erzeugen, dass die Richtungs- und Entfernungsanzeige vor dem Hintergrund eines Kartenausschnitts angezeigt wird. So kann der Benutzer bei manchen Ausführungsbeispielen einen besseren Überblick zu der Lage des Ziels erhalten. Beispielsweise kann ein Kartenausschnitt auf jedwede Art und Weise wiedergegeben werden. Der Kartenausschnitt kann ggf. als Landkarte, Satellitendarstellung oder 3D-Darstellung wiedergegeben werden.

Einige Ausführungsbeispiele betreffen eine Vorrichtung mit der Ansteuereinrichtung nach zumindest einem der vorhergehenden Ausführungsbeispiele und einer Anzeigeeinrichtung. Die Anzeigeeinrichtung zeigt eine Anzeige gemäß dem Anzeigesignal an. Beispielsweise kann die Vorrichtung ein Smartphone, ein Laptop, ein Tablet-PC, eine Anzeigevorrichtung, die fest in einem Fahrzeug installiert ist, wie z.B. ein Display oder dergleichen sein. So kann beispielsweise ermöglicht werden, dass ein Benutzer der sich auf der Vorrichtung mögliche Ziele in seiner Umgebung anzeigen lassen möchte, diese auswählen, vorsortieren und/oder zwischenspeichern kann.

Bei einigen weiteren Ausführungsbeispielen gibt die Ansteuereinrichtung bei Herstellung einer Verbindung zwischen der Vorrichtung und einem fahrzeuginternen Navigationsgerät ein Navigationssignal aus. Das Navigationssignal bewirkt eine Ausgabe einer Navigation mittels des fahrzeuginternen Navigationsgeräts zu dem Ziel. So kann bei manchen Ausführungsbeispielen ermöglicht werden, dass ein Benutzer, beispielsweise Zuhause, mit der Vorrichtung ein Ziel sucht und auswählt. Dann kann er die Vorrichtung in einem Fahrzeug anschließen und sich von dem Navigationssystem des Fahrzeugs zu dem Ziel navigieren lassen. Mit anderen Worten ausgedrückt, kann die Vorrichtung bei manchen Ausführungsbeispielen als ein mobiles Gerät an ein fahrzeugeigenes Navigationsgerät andockbar sein. Das Navigationsgerät kann dann beispielsweise automatisch eine Route zu dem auf dem mobilen Gerät ausgewählten Ziel generieren.

Einige Ausführungsbeispiele betreffen ein Verfahren zum Anzeigen einer Richtungs- und Entfernungsanzeige auf einer Anzeigefläche. Bei dem Verfahren wird ein Eingangssignal empfangen. Das Eingangssignal umfasst eine Information zu einer Entfernung und einer Richtung zu einem Ziel. Ferner wird bei dem Verfahren ein Anzeigesignal erzeugt. Das Anzeigesignal bewirkt eine Darstellung eines einen Winkelbereich überdeckenden Bogenabschnitts auf der Anzeigefläche. Dabei korrespondiert eine Größe des Winkelbereichs zu der Information über die Entfernung und eine Mittelachse des Winkelbereichs zu der Information über die Richtung des Ziels.

Einige Ausführungsbeispiele betreffen ein Computerprogramm zur Durchführung des Verfahrens nach zumindest einem der Ausführungsbeispiele, wenn das Computerprogramm auf einer programmierbaren Hardwarekomponente abläuft.

Ausführungsbeispiele der vorliegenden Erfindung werden nachfolgend bezugnehmend auf die beiliegenden Figuren näher erläutert. Es zeigen:
- Fig. 1: zeigt eine schematische Darstellung einer Ansteuereinrichtung für eine Richtungs- und Entfernungsanzeige auf einer Anzeigefläche gemäß einem Ausführungsbeispiel;
- Fig. 2: zeigt eine schematische Darstellung eines Verfahrens zum Anzeigen einer Richtungs- und Entfernungsanzeige auf einer Anzeigefläche gemäß einem Ausführungsbeispiel;
- Fig. 3: zeigt eine schematische Darstellung einer Wiedergabe auf einer Anzeigefläche gemäß einem Ausführungsbeispiel;
- Fig. 4: zeigt eine schematische Darstellung einer Wiedergabe auf einer Anzeigefläche gemäß einem weiteren Ausführungsbeispiel;
- Fig. 5: zeigt eine schematische Darstellung einer Wiedergabe auf einer Anzeigefläche gemäß einem weiteren Ausführungsbeispiel;
- Fig. 6: zeigt eine schematische Darstellung einer Wiedergabe auf einer Anzeigefläche gemäß einem weiteren Ausführungsbeispiel; und
- Fig. 7: zeigt eine schematische Darstellung einer Wiedergabe auf einer Anzeigefläche gemäß einem weiteren Ausführungsbeispiel.

Verschiedene Ausführungsbeispiele werden nun ausführlicher unter Bezugnahme auf die beiliegenden Zeichnungen beschrieben, in denen einige Ausführungsbeispiele dargestellt sind.

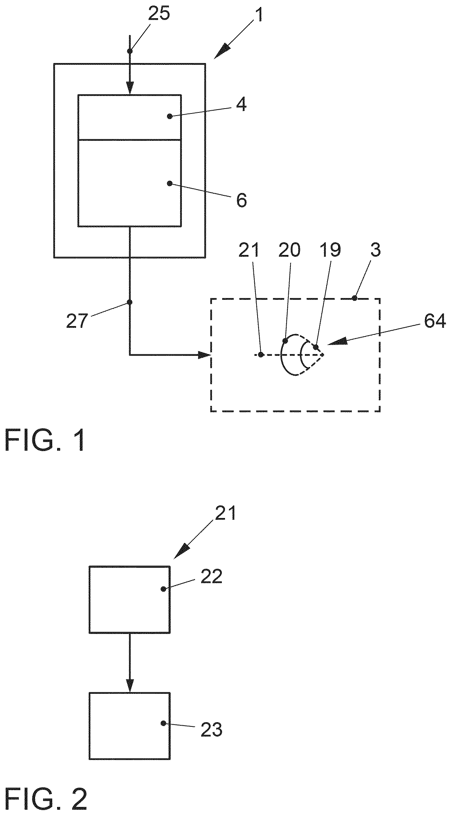

Fig. 1 zeigt eine schematische Darstellung einer Ansteuereinrichtung für eine Richtungs- und Entfernungsanzeige auf einer Anzeigefläche gemäß einem Ausführungsbeispiel. Wie in Fig. 1 dargestellt, umfasst eine Ansteuereinrichtung 1 für eine Richtungs- und Entfernungsanzeige 64 auf einer Anzeigefläche 3 eine Eingangseinrichtung 4, die ausgebildet ist, um ein Eingangssignal 25 zu empfangen. Das Eingangssignal 25 umfasst eine Information zu einer Richtung und einer Entfernung zu einem Ziel. Ferner umfasst die Ansteuereinrichtung 1 einen Controller 6. Der Controller 6 ist ausgebildet, um ein Anzeigesignal 27 zu erzeugen. Das Anzeigesignal 27 bewirkt eine Darstellung eines einen Winkelbereich 19 überdeckenden Bogenabschnitts 20. Eine Größe des Winkelbereichs 19 korrespondiert zu der Information über die Entfernung. Eine Position einer Mittelachse 21 des Winkelbereichs 19 korrespondiert zu der Information über die Richtung des Ziels.

Die Eingangseinrichtung 4 kann mit dem Controller 6 verbunden bzw. verkoppelt sein. Ggf. kann die Eingangseinrichtung 4 eine Eingangsschnittstelle des Controllers 6 sein. Alternativ kann die Eingangseinrichtung 4 mit dem Controller 6 über einen Leiter verbunden sein. Beispielsweise können die Eingangseinrichtung 4 und der Controller 6 auf einer gemeinsamen Leiterplatte, einem Chip oder einer Platine angeordnet sein. Fig. 2 zeigt eine schematische Darstellung eines Verfahrens zum Anzeigen einer Richtungs- und Entfernungsanzeige auf einer Anzeigefläche gemäß einem Ausführungsbeispiel.

Wie in Fig. 2 dargestellt, wird bei einem Verfahren 21 zur Anzeige einer Richtungs- und Entfernungsanzeige 64 auf einer Anzeigefläche 3 in einem Vorgang 22 ein Eingangssignal 25 empfangen. Das Eingangssignal 25 umfasst eine Information zu einer Entfernung und einer Richtung zu einem Ziel. In einem weiteren Vorgang 23 wird ein Anzeigesignal 27 erzeugt. Das Anzeigesignal 27 bewirkt eine Darstellung eines einen Winkelbereich 19 überdeckenden Bogenabschnitts 20 auf der Anzeigefläche 3. Eine Größe des Winkelbereichs 19 korrespondiert zu der Information über die Entfernung. Eine Position einer Mittelachse 21 des Winkelbereichs 19 korrespondiert zu der Information über die Richtung des Ziels.

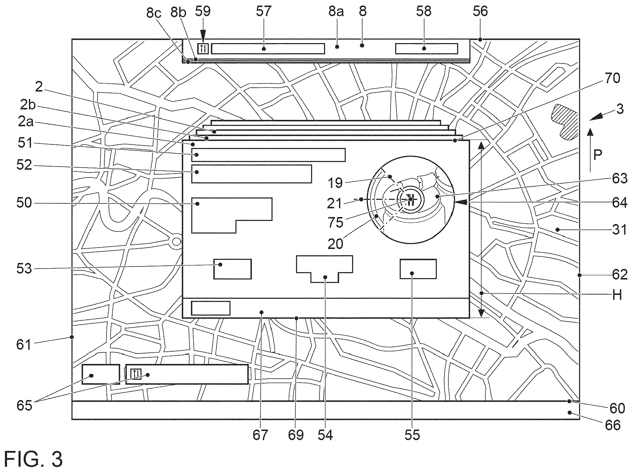

Fig. 3 zeigt eine schematische Darstellung einer Wiedergabe auf einer Anzeigefläche gemäß einem Ausführungsbeispiel in einer einfachen Ansicht (z.B. von einer Grundeinstellung einer Anzeige oder Default von engl.: "Standard").

Wie in Fig. 3 gezeigt, wird eine Mehrzahl von Anzeigebereichen 2 vor dem Hintergrund eines Kartenausschnitts 31 angezeigt. Dabei ist ein erster Anzeigebereich 2a in einem Vordergrund angezeigt, sodass er einen zweiten Anzeigebereich 2b in einem Hintergrund teilweise überlappt. Die vorderste Karteikarte bzw. der Anzeigebereich 2a ist in dem Vordergrund fixiert. Der zweite Anzeigebereich 2b überlappt einen dritten Anzeigebereich. Mit anderen Worten ausgedrückt, sind die Anzeigebereiche 2 als Karteikarten, die übereinander als Stapel angeordnet sind, dargestellt. Beispielsweise kann ein Kartenausschnitt 31 auf jedwede Art und Weise wiedergegeben werden, z.B. kann der Kartenausschnitt 31 als Landkarte, Satellitendarstellung, 3D-Darstellung wiedergegeben werden. Ergänzend oder alternativ können die Anzeigebereiche 2 nach Entfernungen der Ziele, denen sie zugeordnet sind, sortiert sein. Ggf. können weitere Ziele als Anzeigebereiche, die zwischen die bereits angezeigten Anzeigebereiche geschoben werden, hinzugefügt werden.

Jedem der Anzeigebereiche 2 ist eine Information zu einem möglichen Ziel oder einem Point of Interest zugeordnet. Die Information, die dem Anzeigebereich 2 zugeordnet ist, kann zumindest teilweise in dem Anzeigebereich 2 dargestellt oder wiedergegeben sein.

Der Anzeigebereich 2a weist auch eine Richtungs- und/oder Entfernungsanzeige 64 auf. Diese korrespondiert zu einem Ziel, das dem Anzeigebereich 2a zugeordnet ist. Der Anzeigebereich weist auch ein Bild 63 auf, das zu dem Ziel des Anzeigebereichs korrespondiert. Die Richtungs- und Entfernungsanzeige 64 ist vor dem Hintergrund des Bildes 63 dargestellt.

Bei einigen weiteren Ausführungsbeispielen kann die Richtungs- und Entfernungsanzeige 64 unabhängig von dem Bild 63, bzw. das Bild 63 unabhängig von der Richtungs- und Entfernungsanzeige 64, angezeigt werden. Die Ziele bzw. Points of Interest können also bei manchen Ausführungsbeispielen mit einem Bild oder Foto geladen und angezeigt werden.

Die auf dem Anzeigebereich 2a wiedergegebene Richtungs- und Entfernungsanzeige 64 zeigt auf optisch einfache Art und Weise eine Richtung und eine Entfernung, in der das Ziel von einem Standpunkt eines Benutzers aus gesehen liegt. Dazu weist die Richtungs- und Entfernungsanzeige 64 einen Bogenabschnitt 20 auf. Bei dem Ausführungsbeispiel der Fig. 3 ist der Bogenabschnitt 20 ein Kreisbogenabschnitt.

Bei weiteren nicht dargestellten Ausführungsbeispielen kann der Bogenabschnitt auch als Ellipsenbogenabschnitt ausgebildet sein.

Der Bogenabschnitt 20 überdeckt einen Winkelbereich 19. Der Winkelbereich 19 korrespondiert zu einer Entfernung des Ziels. Je größer der Winkelbereich 19 ist, desto größer ist die Entfernung zu dem Ziel. Dabei kann eine maximale Entfernung einem Winkelbereich von 180° entsprechen. Eine Position der Mittelachse 21 des Winkelbereichs 19 entspricht einer Richtung, in der das Ziel liegt. Dadurch, dass der Winkelbereich 19 bei einer größeren Entfernung größer ist, kann für einen Benutzer bei manchen Ausführungsbeispielen auch die Richtungsangabe nicht so genau erscheinen. Wenn sich der Benutzer dem Ziel nähert, verkleinert sich der Winkelbereich 19. Dadurch kann die Richtungsangabe bei manchen Ausführungsbeispielen genauer erscheinen, weil die Mittelachse 21 in dem kleineren Winkelbereich 19 liegt.

Bei einigen weiteren, nicht dargestellten Ausführungsbeispielen kann der Winkelbereich auch so zu der Entfernung korrespondieren, dass je größer der Winkelbereich ist, desto kleiner ist die Entfernung zu dem Ziel.

Der Bogenabschnitt 20 wird vor dem Hintergrund des Bildes 63 angezeigt, das zu dem Ziel, das dem Anzeigebereich 2 zugeordnet ist, korrespondiert. Beispielsweise kann das Bild ein Foto des Ziels sein. Ferner wird an einem Mittelpunkt 57 des Bogenabschnitts 20 eine Information zu der Kategorie, zu der das Ziel gehört, angezeigt. Der Bogenabschnitt 20 ist konzentrisch zu dem kreisscheibenförmigen Bild 63 angeordnet. Das Bild 63 wird in dem Bereich des Winkelabschnitts 19 bzw. in einem Kreisringabschnitt im Bereich des Winkelbereichs 19 in einem anderen Kontrast dargestellt als außerhalb des Winkelbereichs 19. So könnte Bogenabschnitt 20 für den Benutzer besser erkennbar sein.

Bei einigen weiteren, nicht dargestellten Ausführungsbeispielen kann der Bogenabschnitt vor jedwedem anderen Hintergrund dargestellt sein.

Beispielsweise kann sich die Größe des Winkelbereichs 19 linear zu der Entfernung verhalten. Ferner können eine Mehrzahl von Entfernungen einem Winkelbereich 19 zugeordnet sein. So könnten beispielsweise sehr große Entfernungen mit einem Winkelbereich 19 dargestellt werden, der etwas kleiner als 180° ist. Kleinere Entfernungen könnten dann in feineren Abstufungen dargestellt werden. Beispielsweise kann die Entfernung, zu der der Winkelbereich 19 korrespondiert, eine Zeitangabe sein, in der für einen Benutzer, z.B. auch unter Berücksichtigung einer momentanen Verkehrslage, das Ziel erreichbar ist.

Bei einigen weiteren Ausführungsbeispielen ist die Wiedergabe der Richtungs- und Entfernungsanzeige 64 nicht auf den Anzeigebereich beschränkt. Beispielsweise kann die Richtungs- und Entfernungsanzeige 64 in einer Vielzahl von Anwendungen, beispielsweise Routenplanern und Navigationsgeräten, eingesetzt werden.

Bei dem Anzeigebereich 2a wird in einem Textfeld 50 ein Name des Ziels (z.B.: "JORIS BISTRO") oder Point of Interest wiedergegeben. In einem weiteren Adresstextfeld 51 wird eine Adresse des Ziels (z.B.: "Brunnenstraße 158, 17115 Berlin") wiedergegeben. In einem Entfernungsanzeigefeld 52 wird eine Entfernung (z.B.: "1236 METER") zu dem Ziel angegeben. Bei der Entfernung kann es sich dabei um einen Abstand von einem Standpunkt des Benutzers bis zu dem Ziel handeln. Dabei kann der Standpunkt beispielsweise ein tatsächlicher Standpunkt des Benutzers sein. Alternativ kann der Standpunkt auch ein von dem Benutzer gewählter virtueller Standpunkt sein. In einem Bewertungsfeld 53 wird eine Information über eine Bewertung des Ziels wiedergegeben. Dazu kann beispielsweise ein Wert (z.B.: "8.5") angezeigt werden. Frühere Besucher des Ziels können ggf. eine Bewertung des Ziels vorgenommen haben.

Der Anzeigebereich 2a weist auch ein Besucherfeld 54 auf. Dieses zeigt eine Anzahl von Besuchern an, die das Ziel bereits besucht haben. Ferner weist der Anzeigebereich 2a bei dem Ausführungsbeispiel der Fig. 3 ein weiteres Besucherfeld 55 auf. Dieses gibt eine Anzahl der Personen wieder, die sich aktuell an diesem Ziel aufhalten.

Bei einigen weiteren, nicht dargestellten Ausführungsbeispielen können in dem Anzeigebereich jedwede andere Information oder Kombination der genannten Felder dargestellt sein. Bei einigen weiteren, nicht dargestellten Ausführungsbeispielen kann auf der Anzeigefläche eine Information zu einer empfangenen GPS-Signalstärke dargestellt werden.

Wenn ein Benutzer einen Anzeigebereich 2a zu einem Ziel gesehen hat, kann er den Anzeigebereich 2a z.B. mit einer Auswahlgeste in einem Zwischenspeicher ablegen. Dazu kann der Benutzer den Anzeigebereich 2a bzw. die Karteikarte in Pfeilrichtung P nach oben schieben. An einem oberen Rand 56 der Anzeigefläche 3 wird dann das Hinweisfeld 8 eingeblendet. Das Hinweisfeld 8 korrespondiert zu der Information, die dem Anzeigebereich 2a, der über die Bewegung in Pfeilrichtung P in Richtung des oberen Rands geschoben wurde, zugeordnet ist. Bei dem Ausführungsbeispiel der Fig. 3 umfasst das Hinweisfeld 8 ein Textfeld 57. Das Textfeld 57 weist den Namen des Ziels auf, der dem Anzeigebereich 2a zugeordnet ist, der zu dem Hinweisfeld 8 korrespondiert. Das Hinweisfeld 8 kann auch zu einer Mehrzahl von Anzeigebereichen 2 korrespondieren. Das Textfeld 57 kann dann den Namen des Ziels aufweisen, der zu dem Anzeigebereich 2a korrespondiert, der als letztes in dem Zwischenspeicher abgelegt wurde. Alternativ kann das Textfeld 57 auch den Namen des Ziels aufweisen, das die geringste oder größte Entfernung zu dem aktuellen oder virtuellen Standort des Benutzers aufweist. Ferner weist bei dem Ausführungsbeispiel der Fig. 3 das Hinweisfeld 8 ein weiteres Entfernungstextfeld 58 auf. Das Entfernungstextfeld 58 umfasst eine Information zu einer Entfernung zwischen dem Standpunkt und dem Ziel. Dabei kann die Information zu der Entfernung eine Strecke oder eine Zeitdauer sein, die ein Benutzer benötigt, um das Ziel zu erreichen. Das Hinweisfeld 8 weist auch ein Informationsfeld 59 auf. Informationsfeld 59 kann eine weitere Information zu dem Ziel umfassen, zu dem das Hinweisfeld 8 korrespondiert. Beispielsweise kann das Informationsfeld 59 einen Hinweis zu einer Kategorie, der das Ziel zugeordnet ist, umfassen.

Bei dem Ausführungsbeispiel der Fig. 3 umfasst das Hinweisfeld 8 ein erstes Teilhinweisfeld 8a in einem Vordergrund, das ein zweites Teilhinweisfeld 8b in einem Hintergrund zumindest teilweise überlappt. Das Teilhinweisfeld 8b überlappt ein drittes Teilhinweisfeld 8c. Bei dem Ausführungsbeispiel der Fig. 3 wird also der Eindruck erweckt, dass die Anzeigebereiche 2, die in dem Zwischenspeicher abgelegt worden sind, auf einem Stapel liegen, dessen untere Kante an dem oberen Rand 56 der Anzeigefläche dargestellt ist. Dadurch kann beispielsweise angezeigt werden, dass das das Hinweisfeld 8 zu der Information einer Mehrzahl von Anzeigebereichen 2 korrespondiert.

Wenn ein Benutzer einen Anzeigebereich 2a nicht in den Zwischenspeicher an den oberen Rand 56 der Anzeigefläche 3 schieben möchte, kann er den Anzeigebereich 2a z.B. mit einer Bewegung, die der Pfeilrichtung P entgegengerichtet ist, löschen. Die Bewegung kann also zu einem unteren Bildrand 60 gerichtet sein. Dann verschwindet beispielsweise der Anzeigebereich 2a, der in dem Vordergrund angezeigt wird, und der Anzeigebereich 2b wird in einem Vordergrund angezeigt.

Mit anderen Worten ausgedrückt, bietet die Ansteuereinrichtung 1 die Möglichkeit viele Ziele bzw. Point of Interest als Anzeigebereich 2 auf einem Kartenausschnitt 31 darzustellen. Ferner können die Ziele oder Anzeigebereiche 2 in eine Zwischenablage oder einen Zwischenspeicher geschoben werden. Zur Bedienung der Anzeigefläche 3 kann der Benutzer den Anzeigebereich 2 bzw. die Karteikarte nach oben schieben (z.B.: Flick-Up von engl.: "nach oben Schieben") und für später archivieren. Beispielsweise können die Anzeigebereiche 2 so überlappend dargestellt werden, dass Anzeigebereiche 2 einer geringeren Entfernung in dem Vordergrund dargestellt werden. Diese Sortierung kann beispielsweise auch in der Zwischenablage beibehalten werden. Mit einer weiteren Bedienbewegung (z.B.: Flick-Down von engl.: "nach unten Schieben") kann die Karteikarte bzw. der Anzeigebereich 2 von der Anzeigefläche 3 ausgeblendet werden. Die Karteikarte verschwindet also von der Anzeigefläche 3 (z.B. Screen von engl.: "Bildschirm"). Es kann eine automatische Ausblendung in einen Bildschirmschonermodus (z.B.: Screensaver-Modus von engl.: "Bildschirmschonermodus") erfolgen. Ein Löschen kann beispielsweise nicht mehr rückgängig gemacht werden. Wenn der Benutzer die zwischengespeicherten Ziele bzw.

Point of Interest bzw. Informationen, die zu dem Hinweisfeld 8 korrespondieren sehen möchte, kann er diese über eine Auswahlgeste wieder aufrufen. Beispielsweise kann er dazu einfach eine Bedienbewegung in der Nähe des Hinweisfelds 8 ausführen. So kann der Benutzer beispielsweise einen Anzeigebereich 2, der zu dem Teilhinweisfeld 8a korrespondiert, wieder auf den Karteikartenstapel bzw. den Anzeigebereich 2 legen. Ferner kann sich der Benutzer, wenn er alle Anzeigebereiche 2, die in der Mitte des Kartenabschnitts 31 dargestellt sind, gesehen hat, alle zwischengespeicherten Anzeigebereiche 2 ansehen.

Mit der Ansteuereinrichtung 1 kann also beispielsweise die Möglichkeit geboten werden, Points of Interest bzw. Ziele zu sortieren oder auszuwählen. Die Informationen können ggf. aus dem Internet, einem anderen Netzwerk, einem sozialen Netzwerk (z.B. Foursquare von engl.: "viereckig") oder einem Speichermedium stammen. Beispielsweise können über das Internet in einer Umgebung gefundene Ziele oder Points of Interest als Stapel dargestellt werden. Ergänzend oder alternativ können Ziele oder Points of Interest in einem Zwischenspeicher abgelegt oder gelöscht werden. Die Ziele können auch wieder aus dem Zwischenspeicher abgeholt werden. Ein Benutzer kann in manchen Fällen eine gewisse Vorauswahl zum Darstellen der Ziele oder Points of Interest generieren. Der Benutzer kann dazu evtl. eine Kategorie auswählen. Eine Mehrzahl von Zielen kann einer bestimmten Kategorie zugeordnet sein. Zu jedem der Ziele können Informationen angezeigt werden. Diese Informationen können ggf. eine Adresse des Ziels, eine Information, wie viele Mitglieder eines Netzwerks sich aktuell an dem Ziel befinden bzw. den Point of Interest besuchen, wie viele Leute des gleichen Netzwerks den Point of Interest bereits besucht haben, eine Entfernung zu dem Ziel, ein Namen des Ziels, eine Kategorie des Ziels, eine Bewertung des Ziels, eine gesamte Besucheranzahl (z.B. Check Ins von engl.: "Registrierungen") und/oder eine Anzahl von Besuchern, die sich aktuell an dem Ziel befinden, sein.

Wenn der Benutzer den Anzeigebereich 2a zu einem anderen Ziel oder die Karte sehen möchte, den alten jedoch behalten möchte, kann er den Anzeigebereich 2a bzw. die Karteikarte mit einer Auswahlbewegung in die Zwischenablage schieben. Dazu kann er den Point of Interest, bzw. den Anzeigebereich 2a beispielsweise nach oben schieben. Soll der Anzeigebereich 2 für diese Session bzw. das aktuelle Auswahlverfahren gelöscht werden, kann der Benutzer den Anzeigebereich 2a beispielsweise nach unten schieben. Bei manchen Ausführungsbeispielen können also die letzten angeschauten Orte bzw. Ziele oder Points of Interest (z.B. POI's) gespeichert und beispielsweise durch eine Wischgeste angezeigt werden. Ferner können die letzten angeschauten Orte bzw. Ziele oder Points of Interest auswählbar sein.

Bei einigen weiteren nicht dargestellten Ausführungsbeispielen kann die Auswahlgeste, um den Anzeigebereich 2a in den Zwischenspeicher zu schieben jedwede Richtung sein. Beispielsweise könnte der Benutzer den Anzeigebereich 2a dazu zu einem linken Seitenrand 61 oder zu einem rechten Rand 62 oder zu einem unteren Rand 60 schieben. Beispielsweise könnte der Benutzer dazu den Anzeigebereich 2a auch in Richtung der Ecken der Anzeigefläche 3 schieben. Eine Bewegung, um den Anzeigebereich 2a zu löschen, könnte dann der entsprechenden Bewegung zum Speichern des Anzeigebereichs 2a entgegen gerichtet sein.

Wenn die Anzeigebereiche 2 bzw. Ziele oder Points of Interest über das Hinweisfeld 8 aus der Zwischenablage 8 abgeholt werden, können die Anzeigebereiche 2 in einer nicht dargestellten Anzeige nebeneinander dargestellt werden. Die Anzeigebereiche 2 können dabei beispielsweise so weit wie möglich von links bzw. von rechts eingeblendet werden. So können beispielsweise neue Orte dazwischen hinzugefügt werden. Dabei können sich die Anzeigebereiche 2 dann ggf. nicht überlappen. Eventuell kann dies der Fall sein, wenn der Benutzer den ganzen Kartenstapel der Anzeigebereiche 2 durchgeblättert hat. Unter Umständen können die Anzeigebereiche 2 horizontal nebeneinander auf der Anzeigefläche 3 dargestellt werden. Bei einigen weiteren Ausführungsbeispielen können die Anzeigebereiche 2 in jedwedem Muster, nicht überlappend, auf der Anzeigefläche 3 dargestellt werden. Wenn die Anzeigefläche 2 nicht ausreicht, um alle zwischengespeicherten Anzeigebereiche 2 oder Ziele auf der Anzeigefläche 3 darzustellen, können diese beispielsweise horizontal oder vertikal verschoben werden.

Ferner wird auf der Anzeigefläche 3 ein Filterfeld 65 dargestellt. Dieses zeigt an, welchen Filter der Benutzer zur Auswahl der Anzeigebereiche 2 oder der Ziele der Anzeigebereiche 2 gewählt hat. Der Filter kann beispielsweise einer Kategorie entsprechen. Die Kategorie kann ggf. über ein Icon (von engl.: "Bildzeichen") auswählbar sein. Unter Umständen kann das Icon eine Information anzeigen, die wiedergibt, welche Ziele über dieses Icon angezeigt werden können. Das Icon dazu einen Text umfassen. Der Text kann z. B. "Ich möchte nur Gaststätten angezeigt bekommen" lauten. Ferner kann der Text anstelle der Kategorie "Gaststätte" einen Namen einer anderen Kategorie beinhalten. Das Icon kann ggf. auch ein später noch beschriebener Kategorieauswahlbereich 34 sein.

Ergänzend oder alternativ kann als Filter auch eine bestimmte Zeitdauer gewählt sein, innerhalb der die angezeigten Ziele (z.B. 10 min) erreichbar sein sollen. Ferner kann das Filterfeld 65 auch die Zeitdauer in der die angezeigten Ziele erreichbar sein sollen, anzeigen. Ggf. können solche Auswahlkriterien kombiniert sein. Diese gewählten Filterkriterien können beispielsweise in der Filteranzeige 65 zur Information des Benutzers dargestellt werden. Beispielsweise ist eine gewünschte Entfernung zu dem Ziel durch den Benutzer in einer Zeit oder in einer Strecke wählbar. Dadurch, dass der Benutzer eine Zeit angeben kann, kann bei manchen Ausführungsbeispielen ermöglicht werden, dass der Benutzer die tatsächliche Zeit, die benötigt wird um die Ziele zu erreichen, direkt vergleichen kann. Beispielsweise kann das Filterfeld 65 in der Nähe eines unteren Bildrands 60 angezeigt werden.

Andere Filtermöglichkeiten können evtl. eine aktuelle Temperatur sein. Beispielsweise kann die Ansteuereinrichtung dazu Informationen zur Temperatur erhalten. Unter einer bestimmten Grenztemperatur können ggf. keine Ziele angezeigten werden, die eine Eisdiele, ein Freibad oder dergleichen sind. Weitere Filtermöglichkeiten können ggf. auch eine Zeit, beispielsweise eine Tageszeit oder eine Jahreszeit bzw. ein Datum sein. Die Ziele können also bei manchen Ausführungsbeispielen tageszeitabhängig oder jahreszeitabhängig gefiltert werden. Zum Beispiel wird dann im Winter kein Freibad oder tagsüber kein Theater als Ziel angezeigt. Ergänzend oder alternativ werden ggf. keine Freizeitparks als Ziele angezeigt, wenn ein Benutzer beruflich unterwegs ist.

Ferner kann auf der Anzeigefläche 3 eine Statusleiste 66 angezeigt werden. Beispielsweise kann auf der Statusfläche 66 ein Name und eine Adresse des Ziels, das dem Anzeigebereich 2a in dem Vordergrund zugeordnet ist, angegeben sein.

Der Anzeigebereich 2a kann einen Informationsbereich 67 aufweisen. Beispielsweise kann der Benutzer über den Informationsbereich 67 weitere Informationen oder Tipps zu dem Ziel aufrufen. Der Informationsbereich 67 kann ggf. ein Textfeld aufweisen, in dem angegeben wird, wie viele weitere Informationen oder Tipps zu dem Ziel des obersten Anzeigebereichs 2a vorhanden sind. Beispielsweise können diese Tipps von anderen Benutzern oder Usern (von engl: "Benutzer") des Netzwerks stammen.

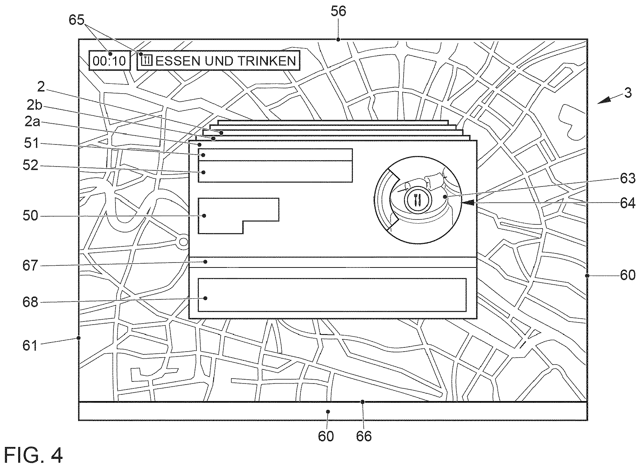

Wenn ein Benutzer über eine Bedienbewegung an dem Informationsbereich 67 diese Tipps aufruft, erfolgt eine Wiedergabe der Anzeigefläche 3, wie in Fig. 4 dargestellt. Zum Einblenden der Tipps kann der Benutzer beispielsweise den Anzeigebereich 2a in dem unteren Bereich des Anzeigebereichs 2a berühren (z.B. Single-Tab von engl.: "einfach Schlag" auf der Karteikarte). Beispielsweise kann dieser Bereich 1/3 einer Höhe des Anzeigebereichs 2a einnehmen, von einem unteren Rand 69 des Anzeigebereichs 2 aus.

Fig. 4 zeigt eine schematische Darstellung einer Wiedergabe auf einer Anzeigefläche gemäß einem weiteren Ausführungsbeispiel.

Wie in Fig. 4 gezeigt, sind nach dem Aufrufen der Tipps in dem Anzeigebereich 2a nur noch das Textfeld 50 mit dem Namen des Ziels, das Adresstextfeld 51, das Entfernungsanzeigefeld 52 und die Richtungsangabe 64 eingeblendet. Mit anderen Worten ausgedrückt, kann der Anzeigebereich 2a vereinfacht dargestellt sein. Dabei kann das Entfernungsanzeigefeld 52 vergrößert dargestellt sein. In einem Tippfeld 68 kann beispielsweise eine Empfehlung oder ein Kommentar eines Benutzers zu dem Ziel angezeigt sein. Mit anderen Worten ausgedrückt, lassen sich die Tipps also optional einblenden. Dabei kann dann ein sogenannter Bildschirmschonermodus unterbrochen werden. Wenn eine Mehrzahl solcher Tipps oder Tippfelder vorhanden sind, können diese ggf. durch eine Bedienbewegung aufgerufen werden. Beispielsweise kann die Bedienbewegung von einem rechten Rand 60 der Anzeigefläche 3 zu einem linken Rand 61 der Anzeigefläche 3 verlaufen. Es kann also in einem Bereich des Tippfeldes 68 möglicherweise per Swipe (von engl.: "streifen") geblättert werden. Alternativ kann die Bedienbewegung in die entgegengerichtete Richtung ausgeführt werden.

Beispielsweise kann, wenn an dem Anzeigebereich 2a in die sogenannte Tippansicht der Fig. 4 gewechselt wird, das Filterfeld 65 an einer anderen Position dargestellt werden. In der Fig. 3 ist das Filterfeld 56 in der Nähe eines unteren Bildrands 60 angezeigt. In der Fig. 4 ist das Filterfeld 65 in der Nähe eines oberen Anzeigerandes 56 dargestellt.

Der Benutzer kann beispielsweise eine Kategorie über eine Bedienbewegung in einem Bereich des Filterfelds 65 wählen. Ggf. kann mit einem Tap (von engl.: "Schlag"; z.B. einer kurzen Berührung) auf das Filterfeld 65 eine Kategorie oder Filtereinstellung aufgerufen werden. Analog kann der Benutzer eine Entfernung ebenfalls über einen Tap auf das Filterfeld auswählen. Ein Tap auf das Filterfeld 65 kann also beispielsweise zu einer anderen Kategorie bzw. einer Entfernung, in der die Ziele des angezeigten Anzeigebereichs 2a liegen, führen.

Ferner kann ein Benutzer einen Anzeigebereich 2a mit einer weiteren Auswahlgeste (z.B.: Single-Tab, also eine einfachen Berührung) für andere Bereiche oder Funktionen nutzen bzw. zur Verfügung stellen. Beispielsweise kann der Anzeigebereich 2a dann in einer Fotogalerie abgelegt werden, zum Teilen in einem Netzwerk oder zum Ablegen in einem anderen Speicher verwendet werden. Dazu kann sich die Karte bzw. der Anzeigebereich 2a beispielsweise drehen. So könnte beispielsweise markiert werden, dass der Anzeigebereich 2a für diese andere Funktion verwendet wird. Beispielsweise kann diese Bedienbewegung in einem oberen Bereich des Anzeigebereichs erfolgen. Dieser Bereich kann ca. 2/3 einer Höhe H des Anzeigebereichs 2a einnehmen.

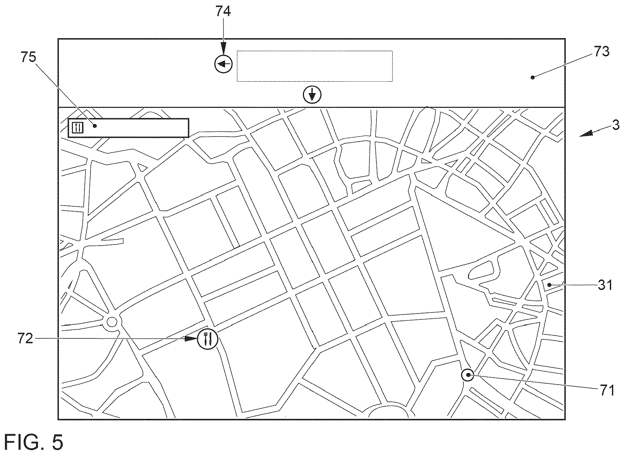

Durch eine Bedienbewegung in dem Bereich der Navigationsleiste 66 kann eine Navigationsanzeige wie in Fig. 5 gezeigt, aufgerufen werden. Die Navigation kann zu dem Ziel, das dem Anzeigebereich 2a in dem Vordergrund zugeordnet ist, generiert werden.

Fig. 5 zeigt eine schematische Darstellung einer Wiedergabe auf einer Anzeigefläche gemäß einem weiteren Ausführungsbeispiel.

Wie in Fig. 5 gezeigt, wird auf dem Kartenausschnitt 31 ein aktueller Standpunkt 71 des Benutzers angezeigt. Es ist auch ein Ziel 72 markiert. Dabei handelt es sich um eine Position des Ziels 72, das dem Anzeigebereichs 2a zugeordnet ist. In einem oberen Bereich der Anzeigefläche 3 können in einer Statusleiste 73 eine Entfernung in Metern zu dem Ziel 72 und eine Adresse des Ziels 72 angegeben sein.

Ferner kann mit einem Pfeilsymbol 74 eine Richtung, in der sich das Ziel 72 von dem Standpunkt 71 des Benutzers aus befindet, angegeben werden. Mit anderen Worten ausgedrückt, kann in einem oberen Bereich die Entfernung, als spätere Angabe für die Navigation eingeblendet werden. Das Pfeilsymbol 74 befindet sich ebenfalls in der Statusleiste 73. Auf dem Kartenausschnitt 31 ist in einem Textfeld 75 ein Name des Ziels 72 und ggf. eine Kategorie des Ziels 72 eingeblendet.

Bei einigen weiteren, nicht dargestellten Ausführungsbeispielen kann auf einzelne dieser Angaben verzichtet werden. Ferner können andere Angaben eingeblendet sein.

Dann kann eine sprach-, text- oder symbolbasierte Navigationsanleitung von dem Standpunkt 71 des Benutzers zu dem Ziel 72 erfolgen. Es kann also eine Navigation zu dem Ziel 72, das zu dem aktuellen Anzeigebereich 2 korrespondiert, angezeigt werden. Beispielsweise kann der Kartenausschnitt 31 für die Navigation vergrößert und/oder verkleinert (z.B. gezoomt) werden. So kann bei manchen Ausführungsbeispielen die aktuelle Position 71 und das Ziel 72 besser erkannt werden. Die Angaben zu der Navigation können beispielsweise von unten eingeblendet werden. Bei dem Ziel 72 handelt es sich um das Ziel, das dem obersten Anzeigebereich 2a aus der Ansicht der Fig. 3 zuvor zugeordnet ist. Es handelt sich also um das Ziel 72 der aktiven Karteikarte aus der vorhergehenden Ansicht.

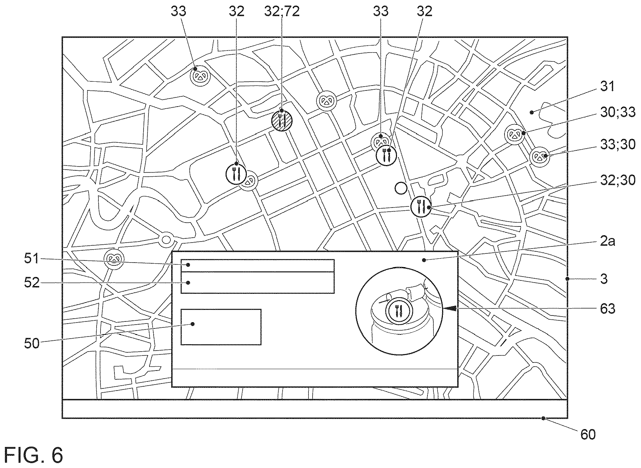

Mit einer weiteren Bedienbewegung, beispielsweise einem zweifachen Berühren (z.B.: Doppelklick, Doppel-Tab) des obersten Anzeigebereichs 2a kann eine Wiedergabe auf der Anzeigefläche 3, wie in Fig. 6 dargestellt, erfolgen.

Fig. 6 zeigt eine schematische Darstellung einer Wiedergabe auf einer Anzeigefläche gemäß einem weiteren Ausführungsbeispiel. Bei der in Fig. 6 dargestellten Anzeige kann es sich um eine sogenannte erweiterte Ansicht handeln.

Bei der in Fig. 6 gezeigten Wiedergabe auf der Anzeigefläche 3 ist der Anzeigebereich 2a verkleinert und in Nähe eines unteren Rands 60 der Anzeigefläche 3 dargestellt. Das Ziel 72, das zu dem Anzeigebereich 2a korrespondiert ist in dem Kartenausschnitt 31 markiert dargestellt.

Bei weiteren nicht dargestellten Ausführungsbeispielen kann der Anzeigebereich in normaler oder anderer Größe und an jedweder anderen Position der Anzeigefläche dargestellt sein. Beispielsweise kann der Anzeigebereich so angezeigt werden, dass er das Ziel, zu dem er korrespondiert, nicht verdeckt.

Ferner sind in dem Kartenausschnitt 31 auch andere Ziele 30 die der gleichen Kategorie wie das Ziel 72 zugeordnet sind, eingeblendet. Diese Ziele 30 sind sogenannte Primärziele 32. Ergänzend werden auf dem Kartenausschnitt 31 auch sogenannte Sekundärziele 33 eingeblendet. Bei den Sekundärzielen 33 handelt es sich um Ziele, die einer anderen Kategorie als der gewählten zugeordnet sind. Mit anderen Worten ausgedrückt, sind die Sekundärziele 33 einer anderen Kategorie als das Ziel 72 des Anzeigebereichs 2a zugeordnet.

Die Darstellung der Sekundärziele 33 unterscheidet sich von der Darstellung der Primärziele 32. Dies kann beispielsweise durch Symbole erfolgen, die sich unterscheiden. Ferner kann eine farbliche Markierung unterschiedlich sein. Ferner können sich die Markierungen beispielsweise durch unterschiedliche Schraffuren unterscheiden. Bei dem Ausführungsbeispiel der Fig. 6 können die Sekundärziele 33 nur schwarz-weiß oder nur grau markiert sein. Die Primärziele 32 können beispielsweise farbig hervorgehoben werden. Das aktuelle Primärziel 72, das zu dem Anzeigebereich 2a korrespondiert, kann in einer anderen Farbe als die anderen Primärziele 32 markiert sein. Bei dem Ausführungsbeispiel der Fig. 6 sind alle Ziele der Kategorie Essen zugeordnet. Einer Kategorie kann ggf. eine Mehrzahl von Subkategorien oder zumindest ein Ziel zugeordnet sein. Alle Primärziele 32 können beispielsweise mit dem gleichen Symbol markiert sein. Bei dem Ausführungsbeispiel der Fig. 6 zeigt das Symbol eine Gabel und ein Messer. Dadurch kann eventuell erkennbar sein, dass alle Primärziele einer Kategorie, beispielsweise der Subkategorie Restaurant, zugeordnet sind. Die Sekundärziele 33 sind mit anderen Symbolen, beispielsweise einer Brezel, markiert. Dadurch kann bei manchen Ausführungsbeispielen erkennbar sein, dass diese einer anderen Subkategorie, beispielsweise bayrischem Essen zugeordnet sind.

Mit anderen Worten ausgedrückt, kann beispielsweise bei einer einfachen Berührung (z.B.: einem Tap) auf die Anzeigefläche 3 bzw. den Anzeigebereich 2a zu der erweiterten Ansicht der Fig. 6 gewechselt werden. Der Anzeigebereich 2a bzw. die Karteikarte wird dabei kleiner und verschiebt sich nach unten. Das Ziel 72 der aktiven Karteikarte bzw. des Anzeigebereichs 2a kann markiert hervorgehoben werden. Die Wiedergabe vergleichbarer Orte, also anderer Primärziele 32 der gleichen Kategorie kann beispielsweise in grün erfolgen. Orte anderer Kategorien, also die Sekundärziele 33 können ggf. in grau angezeigt werden.

Bei einigen weiteren, nicht dargestellten Ausführungsbeispielen kann erst bei einer entsprechenden Auswahlgeste (z.B.: Tap auf ein Symbol oder Icon auf dem Anzeigebereich 2a) der Ort bzw. das Ziel 72 der Karteikarte angezeigt bzw. markiert werden. Mit einer weiteren Auswahlgeste eines Benutzers (z.B.: Tap auf den Anzeigebereich 2a) kann beispielsweise zurück in die Ansicht der Fig. 3 gewechselt werden.

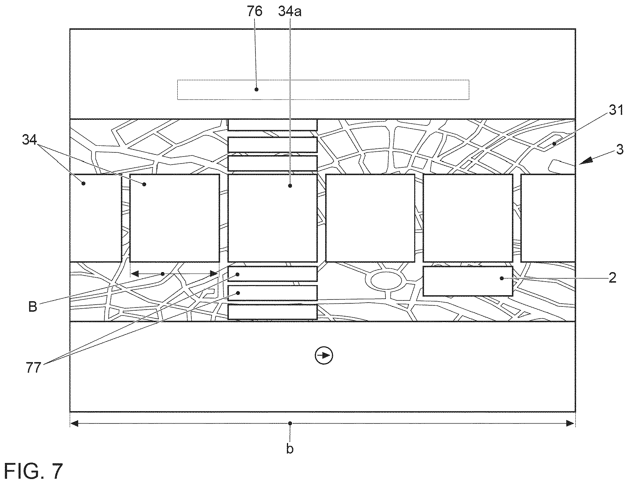

Fig. 7 zeigt eine schematische Darstellung einer Wiedergabe auf einer Anzeigefläche gemäß einem weiteren Ausführungsbeispiel. Diese dient zum Auswählen der Kategorien in der mögliche Ziele liegen sollen.

Wie in Fig. 7 dargestellt, ist auf der Anzeigefläche vor dem Hintergrund des Kartenabschnitts 31 eine Mehrzahl von Kategorieanzeigebereichen 34 dargestellt. Beispielsweise kann der Kartenabschnitt zu einem Standpunkt des Benutzers korrespondieren. Beispielsweise kann der Standpunkt des Benutzers in dem Kartenabschnitt liegen.

Bei weiteren, nicht dargestellten Ausführungsbeispielen können die Kategorieanzeigebereiche 34 auch vor einem Hintergrund, der kein Kartenabschnitt ist, angezeigt werden.

Beispielsweise kann ein Informationsfeld 76 eingeblendet werden. Dieses kann einen Hinweis an den Benutzer enthalten eine Kategorie auszuwählen. Dieser Hinweis kann ggf. lauten: "Bitte wählen Sie eine oder mehrere Kategorien aus". Unter Umständen kann der Benutzer auch eine Mehrzahl von Kategorien auswählen. Die Kategorieauswahlbereiche 34 können horizontal nebeneinander angeordnet sein. Beispielsweise können die Kategorieauswahlbereiche 34 so angeordnet sein, dass sie sich nicht überlappen. Wenn eine Summe der Breiten B der Kategorieauswahlbereiche 34 eine Gesamtbreite b der Anzeigefläche 3 übersteigt, können diese möglicherweise mit einer Bedienbewegung über die Anzeigefläche 3 geschoben werden. Ferner kann beispielsweise jedem der Kategorieauswahlbereiche 34 eine Mehrzahl von Zielen 30 zugeordnet sein. Ferner kann einem Kategorieauswahlbereich 34a eine Mehrzahl von Subkategorieauswahlbereichen 77 zugeordnet sein. Jedem der Subkategorieauswahlbereiche 77 kann eine Mehrzahl von Zielen 30 zugeordnet sein. Beispielsweise kann eine Kategorie "Restaurant" sein. Eine Subkategorie kann ggf. eine Art des Essens, das in diesen Restaurants serviert wird, sein.

Ferner kann bei der Anzeige der Fig. 7 auch ein Anzeigebereich 2 angezeigt werden. Diesem kann eine Information zu einem Ziel zugeordnet sein, das der Benutzer zuletzt besucht hat.

Mit anderen Worten ausgedrückt, bietet die Wiedergabe auf der Anzeigefläche 3 nach der Fig. 7 die Möglichkeit eine Vorauswahl zumindest einer Kategorie zu treffen. Beispielsweise können Hauptkategorien dabei horizontal und Subkategorien dabei vertikal angeordnet sein. Ferner kann ein Assistent für eine Entfernung angezeigt oder aufgerufen werden. Die Entfernung kann evtl. als eine Zeitdauer angegeben werden.

Zusammenfassend betreffen Ausführungsbeispiele eine Ansteuereinrichtung 1 für eine Richtungs- und Entfernungsanzeige 64 auf einer Anzeigefläche 3 eine Eingangseinrichtung 4 die ausgebildet ist, um ein Eingangssignal 25 zu empfangen. Das Eingangssignal 25 umfasst eine Information zu einer Richtung und einer Entfernung zu einem Ziel. Ferner umfasst die Ansteuereinrichtung 1 einen Controller 6. Der Controller 6 ist ausgebildet, um ein Anzeigesignal 27 zu erzeugen. Das Anzeigesignal 27 bewirkt eine Darstellung eines einen Winkelbereich 19 überdeckenden Bogenabschnitts 20. Eine Größe des Winkelbereichs 19 korrespondiert zu der Information über die Entfernung. Eine Position einer Mittelachse 21 des Winkelbereichs 19 korrespondiert zu der Information über die Richtung des Ziels.

Ergänzend oder alternativ kann die Ansteuereinrichtung zum Markieren einer Mehrzahl möglicher Ziele 30, 23, 33, 72 in einem Kartenausschnitt 31 auf der Anzeigefläche 3 dienen. Dazu kann die Eingangseinrichtung 4 ausgebildet sein, um ein Kategorieauswahlsignal zu empfangen, das zu einer Auswahl eines Benutzers korrespondiert, wobei das Kategorieauswahlsignal eine Information über eine gewählte Kategorie möglicher Primärziele 32 umfasst. Ferner kann der Controller 6 ausgebildet sein, um ansprechend auf das Kategorieauswahlsignal ein Anzeigesignal zu erzeugen, welches eine Wiedergabe möglicher Primärziele 32 korrespondierend zu der Information der gewählten Kategorie und eine Wiedergabe von Sekundärzielen 33 zumindest einer anderen Kategorie in dem Kartenausschnitt 31 bewirkt, wobei sich die Darstellung der Primärziele 32 der gewählten Kategorie von der Darstellung der Sekundärziele 33 der anderen Kategorie unterscheidet.

Gemäß einigen Ausführungsbeispielen ist der Controller 6 ausgebildet, um das Anzeigesignal so zu erzeugen, dass eine Wiedergabe eines Anzeigebereichs 2 bewirkt wird, wobei dem Anzeigebereich 2 eine Information zu einem ausgewählten Primärziel 32, 72 zugeordnet ist.

Gemäß einigen Ausführungsbeispielen ist der Controller 6 ausgebildet, um das Anzeigesignal so zu erzeugen, dass sich eine Darstellung des Primärziels 72, dessen Information dem wiedergegebenen Anzeigebereich zugeordnet ist, von der Darstellung der anderen Primärziele 32 und der Sekundärziele 33 unterscheidet.

Gemäß einigen Ausführungsbeispielen ist der Controller 6 ausgebildet, um ansprechend auf ein von der Eingangseinrichtung 4 empfangenes Kartenanzeigesignal, das zu einer Bedienbewegung eines Benutzers korrespondiert, das Anzeigesignal so zu verändern, dass eine verkleinerte Wiedergabe des Anzeigebereichs 2 bewirkt wird.

Gemäß einigen Ausführungsbeispielen ist der Controller 6 ausgebildet, um ansprechend auf ein von der Eingangseinrichtung 4 empfangenes Kartenanzeigesignal, das zu einer Bedienbewegung eines Benutzers korrespondiert, das Anzeigesignal so zu verändern, dass eine Wiedergabe des Anzeigebereichs 2 in einem Randbereich der Anzeigefläche 3 bewirkt wird.

Gemäß einigen Ausführungsbeispielen ist der Controller 6 ausgebildet, um das Anzeigesignal so zu erzeugen, dass der Anzeigebereich 2 die angezeigten Ziele 30, 23, 33, 72 nicht überlappt.

Gemäß einigen Ausführungsbeispielen ist der Controller 6 ausgebildet, um das Anzeigesignal so zu erzeugen, dass der Anzeigebereich 2 angezeigte Primärziele 32 nicht überlappt und Sekundärziele überlappt.

Gemäß einigen Ausführungsbeispielen ist der Controller 6 ausgebildet, um das Anzeigesignal so zu erzeugen, dass das gewählte Primärziel 72, 32 nicht von dem Anzeigebereich 2 überlappt ist.

Gemäß einigen Ausführungsbeispielen ist der Controller 6 ausgebildet, um ansprechend auf ein Menüauswahlsignal, das von der Eingangseinrichtung 4 empfangen wird und zu einer Auswahlgeste des Benutzers korrespondiert, ein Kategorieauswahlanzeigesignal zu erzeugen, das die Wiedergabe einer Mehrzahl von Kategorieauswahlbereichen 34 bewirkt, wobei jedem der Kategorieauswahlbereiche 34 jeweils zumindest ein Ziel 30, 23, 33, 72 zugeordnet ist.

Gemäß einigen Ausführungsbeispielen ist die Eingangseinrichtung 4 ausgebildet, um das Kategorieauswahlsignal zu empfangen, wenn eine Auswahlgeste eines Benutzers an einem Kategorieauswahlbereich 34 beginnt.

Gemäß einigen Ausführungsbeispielen ist der Controller 6 ausgebildet, um ansprechend auf das Kategorieauswahlsignal, wenn dem Kategorieauswahlbereich 34 eine Information zu einer Mehrzahl von Subkategorien zugeordnet ist, das Anzeigesignal so zu verändern, dass die Wiedergabe einer Mehrzahl von Subkategorieauswahlbereichen 77 bewirkt wird, wobei jedem der Subkategorieauswahlbereiche 77 zumindest ein Ziel 30, 23, 33, 72 zugeordnet ist.

Gemäß einigen Ausführungsbeispielen ist die Eingangseinrichtung 4 ausgebildet, um das Kategorieauswahlsignal zu empfangen, wenn eine Auswahlgeste eines Benutzers an einem Subkategorieauswahlbereich 77 beginnt.

Einige Ausführungsbeispiele betreffen eine Vorrichtung mit einer Ansteuereinrichtung 1 nach einem der vorhergehenden Ausführungsbeispiele und einer Anzeigefläche 3, die eine Anzeige gemäß dem Anzeigesignal anzeigt.

Gemäß einigen weiteren Ausführungsbeispielen der Vorrichtung ist die Ansteuereinrichtung 1 ausgebildet ist, um bei Herstellung einer Verbindung mit einem fahrzeuginternen Navigationsgerät ein Navigationssignal auszugeben, das eine Ausgabe einer Navigation mittels des fahrzeuginternen Navigationsgeräts zu dem ausgewählten Primärziel 32, 72 bewirkt.

Ergänzend oder alternativ kann mit dem Verfahren eine Mehrzahl möglicher Ziele 30, 23, 33, 72 in einem Kartenausschnitt 31 auf der Anzeigefläche 3 markiert werden. Dazu kann ein Kategorieauswahlsignal empfangen werden, das zu einer Auswahl eines Benutzers korrespondiert, wobei das Kategorieauswahlsignal eine Information über eine gewählte Kategorie möglicher Ziele 30, 23, 33, 72 umfasst. Ferner kann ein Anzeigesignal erzeugt werden, das ansprechend auf das Kategorieauswahlsignal, eine Wiedergabe möglicher Primärziele 32 korrespondierend zu der Information der gewählten Kategorie und eine Wiedergabe von Sekundärzielen 32 zumindest einer anderen Kategorie in dem Kartenausschnitt bewirkt, wobei sich die Darstellung der Primärziele 32 der gewählten Kategorie von der Darstellung der Sekundärziele 33 der anderen Kategorie unterscheidet.

Einige Ausführungsbeispiele betreffen ein Computerprogramm zur Durchführung des Verfahrens nach einem der vorhergehenden Ausführungsbeispiele, wenn das Computerprogramm auf einer programmierbaren Hardwarekomponente abläuft.

Ergänzend oder alternativ kann die Ansteuereinrichtung 1 dazu dienen, eine Wiedergabe einer Mehrzahl von Anzeigebereichen 2 auf der Anzeigefläche 3 zu verändern; wobei ein erster Anzeigebereich 2a in einem Vordergrund einen zweiten Anzeigebereich 2b in einem Hintergrund teilweise überlappt. Dabei kann jedem der Anzeigebereiche 2 jeweils eine Information zu einem möglichen Ziel 30, 32, 33, 72 zugeordnet sein. Dazu kann die Eingangseinrichtung 4 ausgebildet sein, um ein Speichersignal zu empfangen, das zu einer vorbestimmten Auswahlgeste eines Benutzers korrespondiert. Ferner kann der Controller 6 ausgebildet sein, um ansprechend auf das Speichersignal ein Anzeigesignal zu erzeugen, das eine Anzeige des zweiten Anzeigebereichs 2b in dem Vordergrund und eine Anzeige eines zu der Information des ersten Anzeigebereichs korrespondierenden Hinweisfeldes 8 außerhalb der Mehrzahl der Anzeigebereiche 2 bewirkt.

Gemäß einigen Ausführungsbeispielen ist der Controller 6 ausgebildet, um ansprechend auf ein Aufrufsignal, das zu einer weiteren Auswahlgeste des Benutzers korrespondiert, das Anzeigesignal so zu verändern, dass eine Wiedergabe des ersten Anzeigebereichs 2a zu dem das Hinweisfeld 8 korrespondiert, bewirkt.

Gemäß einigen Ausführungsbeispielen ist die Eingangseinrichtung 4 ausgebildet, um das Aufrufsignal zu empfangen, wenn die Auswahlgeste zu der das Aufrufsignal korrespondiert, an dem Hinweisfeld 8 beginnt.

Gemäß einigen Ausführungsbeispielen ist die Eingangseinrichtung 4 ausgebildet, um das Speichersignal zu empfangen, wenn die Auswahlgeste, zu der das Speichersignal 5 korrespondiert, an dem Anzeigebereich 2a beginnt.

Gemäß einigen Ausführungsbeispielen ist der Controller 6 ausgebildet, um ansprechend auf ein Löschsignal, das zu einer weiteren Auswahlgeste eines Benutzers korrespondiert, und das von der Eingangseinrichtung 4 empfangen wird, das Anzeigesignal so zu erzeugen, dass eine Anzeige des zweiten Anzeigebereichs 2b in dem Vordergrund bewirkt und der erste Anzeigebereich 2a gelöscht wird.

Gemäß einigen Ausführungsbeispielen ist die Eingangseinrichtung 4 ausgebildet, um das Löschsignal zu empfangen, wenn die Auswahlgeste, zu der das Löschsignal korrespondiert, an dem Anzeigebereich 2a beginnt und wobei sich die Auswahlgeste in eine andere Richtung erstreckt, als die Auswahlgeste, zu der das Speichersignal korrespondiert.

Gemäß einigen Ausführungsbeispielen ist der Controller 6 ausgebildet, um das Anzeigesignal so zu erzeugen, dass das Hinweisfeld 8 zu der Information einer Mehrzahl von Anzeigebereichen 2 korrespondiert.

Gemäß einigen Ausführungsbeispielen ist der Controller 6 ausgebildet, um ansprechend auf das Aufrufsignal das Anzeigesignal so zu verändern, dass eine Wiedergabe der Anzeigebereiche 2 bewirkt wird, zu denen das Hinweisfeld 8 korrespondiert, so dass diese nebeneinander angeordnet sind.

Gemäß einigen Ausführungsbeispielen ist der Controller 6 ausgebildet, um das Anzeigesignal so zu erzeugen, es eine Wiedergabe eines Kartenausschnitts 31 als Hintergrund bewirkt, wobei die Ziele 30, 32, 33, 72 zumindest teilweise in einem Bereich des wiedergegebenen Kartenausschnitts 31 liegen.

Gemäß einigen Ausführungsbeispielen ist die Eingangseinrichtung 4 ausgebildet, um ein Zielsignal zu empfangen, das eine Information umfasst, zu einer Mehrzahl von möglichen Zielen 30, 32, 33, 72 ,wobei die Anzeigebereiche 2basierend auf dem Zielsignal angezeigt werden.

Gemäß einigen Ausführungsbeispielen ist die Eingangseinrichtung 4 ausgebildet, um ein Temperatursignal zu empfangen, das eine Information über eine Temperatur umfasst und die Anzeigebereiche 2 basierend auf der Information des Temperatursignals angezeigt werden.

Gemäß einigen Ausführungsbeispielen ist die Eingangseinrichtung 4 ausgebildet, um ein Umgebungssignal zu empfangen, das eine Information über eine Umgebung umfasst und die Anzeigebereiche 2 basierend auf der Information des Umgebungssignals angezeigt werden.

Einige Ausführungsbeispiele betreffen eine Vorrichtung mit einer Ansteuereinrichtung 1 nach einem der vorhergehenden Ausführungsbeispiele und einer Anzeigefläche 3, die eine Anzeige gemäß dem Anzeigesignal anzeigt.

Gemäß einigen weiteren Ausführungsbeispielen der Vorrichtung ist die Ansteuereinrichtung 1 ausgebildet, um bei Herstellung einer Verbindung mit einem fahrzeuginternen Navigationsgerät ein Navigationssignal auszugeben, das eine Ausgabe einer Navigation mittels des fahrzeuginternen Navigationsgeräts zu einem ausgewählten Ziel 32, 72 bewirkt. Ergänzend oder alternativ kann bei dem Verfahren eine Wiedergabe einer Mehrzahl von Anzeigebereichen 2 auf der Anzeigefläche 3 verändert werden. Dazu können eine Mehrzahl von Anzeigebereichen 2 angezeigt werden, wobei ein erster Anzeigebereich 2a in einem Vordergrund einen zweiten Anzeigebereich 2b in einem Hintergrund teilweise überlappt, wobei jedem der Anzeigebereich 2 jeweils eine Information zu einem möglichen Ziel 30, 32, 33, 72 zugeordnet ist. Ferner kann ein Speichersignal 5 empfangen werden, das zu einer vorbestimmten Auswahlgeste eines Benutzers korrespondiert. Des Weiteren kann das Anzeigesignal erzeugt werden, ansprechend auf das Speichersignal, wobei das Anzeigesignal eine Anzeige des zweiten Anzeigebereichs 2b in dem Vordergrund und eine Anzeige eines zu der Information des ersten Anzeigebereichs 2a korrespondierenden Hinweisfeldes 8 in einem Bereich außerhalb der Mehrzahl der Anzeigebereiche 2 auf der Anzeigefläche 3 bewirkt.

Einige Ausführungsbeispiele betreffen ein Computerprogramm zur Durchführung des Verfahrens nach zumindest einem der Ausführungsbeispiele, wenn das Computerprogramm auf einer programmierbaren Hardwarekomponente abläuft.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-Ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einer programmierbaren Hardwarekomponente derart zusammenwirken können oder zusammenwirken, dass das jeweilige Verfahren durchgeführt wird.

Eine programmierbare Hardwarekomponente kann durch einen Prozessor, einen Computerprozessor (CPU = Central Processing Unit), einen Grafikprozessor (GPU = Graphics Processing Unit), einen Computer, ein Computersystem, einen anwendungsspezifischen integrierten Schaltkreis (ASIC = Application-Specific Integrated Circuit), einen integrierten Schaltkreis (IC = Integrated Circuit), ein Ein-Chip-System (SOC = System on Chip), ein programmierbares Logikelement oder ein feldprogrammierbares Gatterarray mit einem Mikroprozessor (FPGA = Field Programmable Gate Array) gebildet sein.

Das digitale Speichermedium kann daher maschinen- oder computerlesbar sein.

Manche Ausführungsbeispiele umfassen also einen Datenträger, der elektronisch lesbare Steuersignale aufweist, die in der Lage sind, mit einem programmierbaren Computersystem oder einer programmierbare Hardwarekomponente derart zusammenzuwirken, dass eines der hierin beschriebenen Verfahren durchgeführt wird. Ein Ausführungsbeispiel ist somit ein Datenträger (oder ein digitales Speichermedium oder ein computerlesbares Medium), auf dem das Programm zum Durchführen eines der hierin beschriebenen Verfahren aufgezeichnet ist.

Allgemein können Ausführungsbeispiele der vorliegenden Erfindung als Programm, Firmware, Computerprogramm oder Computerprogrammprodukt mit einem Programmcode oder als Daten implementiert sein, wobei der Programmcode oder die Daten dahin gehend wirksam ist bzw. sind, eines der Verfahren durchzuführen, wenn das Programm auf einem Prozessor oder einer programmierbaren Hardwarekomponente abläuft. Der Programmcode oder die Daten kann bzw. können beispielsweise auch auf einem maschinenlesbaren Träger oder Datenträger gespeichert sein. Der Programmcode oder die Daten können unter anderem als Quellcode, Maschinencode oder Bytecode sowie als anderer Zwischencode vorliegen.

Ein weiteres Ausführungsbeispiel ist ferner ein Datenstrom, eine Signalfolge oder eine Sequenz von Signalen, der bzw. die das Programm zum Durchführen eines der hierin beschriebenen Verfahren darstellt bzw. darstellen. Der Datenstrom, die Signalfolge oder die Sequenz von Signalen kann bzw. können beispielsweise dahin gehend konfiguriert sein, um über eine Datenkommunikationsverbindung, beispielsweise über das Internet oder ein anderes Netzwerk, transferiert zu werden. Ausführungsbeispiele sind so auch Daten repräsentierende Signalfolgen, die für eine Übersendung über ein Netzwerk oder eine Datenkommunikationsverbindung geeignet sind, wobei die Daten das Programm darstellen.

Ein Programm gemäß einem Ausführungsbeispiel kann eines der Verfahren während seiner Durchführung beispielsweise dadurch umsetzen, dass dieses Speicherstellen ausliest oder in diese ein Datum oder mehrere Daten hinein schreibt, wodurch gegebenenfalls Schaltvorgänge oder andere Vorgänge in Transistorstrukturen, in Verstärkerstrukturen oder in anderen elektrischen, optischen, magnetischen oder nach einem anderen Funktionsprinzip arbeitenden Bauteile hervorgerufen werden. Entsprechend können durch ein Auslesen einer Speicherstelle Daten, Werte, Sensorwerte oder andere Informationen von einem Programm erfasst, bestimmt oder gemessen werden. Ein Programm kann daher durch ein Auslesen von einer oder mehreren Speicherstellen Größen, Werte, Messgrößen und andere Informationen erfassen, bestimmen oder messen, sowie durch ein Schreiben in eine oder mehrere Speicherstellen eine Aktion bewirken, veranlassen oder durchführen sowie andere Geräte, Maschinen und Komponenten ansteuern.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Ansteuereinrichtung (1) für eine Richtungs- und Entfernungsanzeige (64) auf einer Anzeigefläche (3); mit
einer Eingangseinrichtung (4), die ausgebildet ist, um ein Eingangssignal (25) mit einer Information zu einer Entfernung und einer Richtung zu einem Ziel (30, 23, 33 72) zu empfangen; und
einem Controller (6),
**dadurch gekennzeichnet, dass** der Controller ausgebildet ist, um ein Anzeigesignal (27) zu erzeugen, das eine Darstellung eines einen Winkelbereich (19) überdeckenden Bogenabschnitts (20) auf der Anzeigefläche (3) bewirkt, wobei eine Größe des Winkelbereichs (19) zu der Information über die Entfernung und eine Position einer Mittelachse (21) des Winkelbereichs (19) zu der Information über die Richtung des Ziels (30, 23, 33 72) korrespondiert.

2. Ansteuereinrichtung (1) nach Anspruch 1, wobei der Controller (6) ausgebildet ist, um die Größe des Winkelbereichs (19) aus der Information über die Entfernung des Ziels (30, 23, 33 72) zu berechnen.

3. Ansteuereinrichtung (1) nach einem der vorhergehenden Ansprüche, wobei die Information zu der Entfernung eine Zeit ist.

4. Ansteuereinrichtung (1) nach einem der vorhergehenden Ansprüche, wobei die Information zu der Entfernung eine Strecke ist.

5. Ansteuereinrichtung (1) nach einem der vorhergehenden Ansprüche, wobei der Controller (6) ausgebildet ist, um eine Position der Mittelachse (21) aus einer Information über die Richtung des Ziels (30, 23, 33 72) zu berechnen.

6. Ansteuereinrichtung (1) nach einem der vorhergehenden Ansprüche, wobei der Controller (6) ausgebildet ist, um das Anzeigesignal (27) so zu erzeugen, dass der Winkelbereich (19) bei einer ersten Entfernung, die kleiner ist als eine zweite Entfernung, kleiner ist als bei der zweiten Entfernung.

7. Ansteuereinrichtung (1) nach einem der vorhergehenden Ansprüche, wobei der Controller (6) ausgebildet ist, um das Anzeigesignal (27) so zu erzeugen, dass eine Größe des Winkelbereichs (19) linear zu einer Entfernung ist und eine maximale Entfernung zu einem Winkel von 180° korrespondiert.

8. Ansteuereinrichtung (1) nach einem der Ansprüche 1 bis 6, wobei der Controller (6) ausgebildet ist, um das Anzeigesignal (27) so zu erzeugen, dass eine Mehrzahl von Entfernungen, die in einem Wertebereich liegen, zu einem Winkelbereich (19) einer Größe korrespondieren.

9. Ansteuereinrichtung (1) nach einem der vorhergehenden Ansprüche, wobei der Controller (6) ausgebildet ist, um das Anzeigesignal (27) so zu erzeugen, dass der Bogenabschnitt (20) auf einem Hintergrund angezeigt wird, von dem sich der Bogenabschnitt (20) abhebt.

10. Ansteuereinrichtung (1) nach einem der vorhergehenden Ansprüche, wobei der Controller (6) ausgebildet ist, um das Anzeigesignal (27) so zu erzeugen, dass der Hintergrund in dem Winkelbereich (19) zumindest teilweise anders dargestellt ist als außerhalb des Winkelbereichs (19).

11. Ansteuereinrichtung (1) nach einem der vorhergehenden Ansprüche, wobei der Controller (6) ausgebildet ist, um das Anzeigesignal (27) so zu erzeugen, dass der Bogenabschnitt (20) konzentrisch zu einem äußerem Rand des Hintergrunds angeordnet ist.

12. Ansteuereinrichtung (1) nach einem der vorhergehenden Ansprüche, wobei der Controller (6) ausgebildet ist, um das Anzeigesignal (27) so zu erzeugen, dass die Richtungs- und Entfernungsanzeige vor dem Hintergrund eines Kartenausschnitts (31) angezeigt wird.

13. Vorrichtung mit einer Ansteuereinrichtung (1) nach einem der vorhergehenden Ansprüche und ferner umfassend: eine Anzeigefläche (3), die eine Anzeige gemäß dem Anzeigesignal (27) anzeigt.

14. Vorrichtung nach Anspruch 13, wobei die Ansteuereinrichtung (1) ausgebildet ist, um bei Herstellung einer Verbindung mit einem fahrzeuginternen Navigationsgerät ein Navigationssignal auszugeben, das eine Ausgabe einer Navigation mittels des fahrzeuginternen Navigationsgeräts zu dem Ziel (32, 72) bewirkt.

15. Verfahren (24) zum Anzeigen einer Richtungs- und Entfernungsanzeige (64) auf einer Anzeigefläche (3), wobei das Verfahren (24) umfasst:
Empfangen (22) eines Eingangssignal (25) mit einer Information zu einer Entfernung und einer Richtung zu einem Ziel (30, 23, 33 72); und
Erzeugen (23) eines Anzeigesignals (27),
**dadurch gekennzeichnet, dass** das Anzeigesignal (27) eine Darstellung eines einen Winkelbereich (19) überdeckenden Bogenabschnitts (20) auf der Anzeigefläche (3) bewirkt, wobei eine Größe des Winkelbereichs (19) zu der Information über die Entfernung und eine Position einer Mittelachse (21) des Winkelbereichs (19) zu der Information über der Richtung des Ziels (30, 23, 33 72) korrespondiert.

16. Computerprogramm zur Durchführung des Verfahrens (24) nach Anspruch 15, wenn das Computerprogramm auf einer programmierbaren Hardwarekomponente abläuft.

## Claims

1. Actuation device (1) for a direction and distance display (64) on a display panel (3); having
an input device (4) configured to receive an input signal (25) having a piece of information pertaining to a distance and a direction to a destination (30, 23, 33, 72); and
a controller (6),
**characterized in that** the controller is configured to produce a display signal (27) that causes a depiction of an arc section (20), covering an angle range (19), on the display panel (3), wherein a magnitude of the angle range (19) corresponds to the information about the distance and a position of a central axis (21) of the angle range (19) corresponds to the information about the direction of the destination (30, 23, 33, 72).

2. Actuation device (1) according to Claim 1, wherein the controller (6) is configured to compute the magnitude of the angle range (19) from the information about the distance of the destination (30, 23, 33, 72).

3. Actuation device (1) according to either of the preceding claims, wherein the information pertaining to the distance is a time.

4. Actuation device (1) according to one of the preceding claims, wherein the information pertaining to the distance is a length.

5. Actuation device (1) according to one of the preceding claims, wherein the controller (6) is configured to compute a position of the central axis (21) from a piece of information about the direction of the destination (30, 23, 33, 72).

6. Actuation device (1) according to one of the preceding claims, wherein the controller (6) is configured to produce the display signal (27) such that the angle range (19) is smaller in the case of a first distance, which is shorter than a second distance, than in the case of the second distance.

7. Actuation device (1) according to one of the preceding claims, wherein the controller (6) is configured to produce the display signal (27) such that a magnitude of the angle range (19) is linear in relation to a distance and a maximum distance corresponds to an angle of 180°.

8. Actuation device (1) according to one of Claims 1 to 6, wherein the controller (6) is configured to produce the display signal (27) such that a plurality of distances that are in a value range correspond to an angle range (19) of a magnitude.

9. Actuation device (1) according to one of the preceding claims, wherein the controller (6) is configured to produce the display signal (27) such that the arc section (20) is displayed on a background from which the arc section (20) stands out.

10. Actuation device (1) according to one of the preceding claims, wherein the controller (6) is configured to produce the display signal (27) such that at least part of the background in the angle range (19) is depicted differently than outside the angle range (19).

11. Actuation device (1) according to one of the preceding claims, wherein the controller (6) is configured to produce the display signal (27) such that the arc section (20) is arranged concentrically in relation to an outer edge of the background.

12. Actuation device (1) according to one of the preceding claims, wherein the controller (6) is configured to produce the display signal (27) such that the direction and distance display is displayed in front of the background of a map detail (31).

13. Apparatus having an actuation device (1) according to one of the preceding claims and further comprising: a display panel (3) that displays a display according to the display signal (27).

14. Apparatus according to Claim 13, wherein the actuation device (1) is configured so as, on setup of a connection to a vehicle-internal navigation appliance, to output a navigation signal that causes an output of a navigation by means of the vehicle-internal navigation appliance to the destination (32, 72).

15. Method (24) for displaying a direction and distance display (64) on a display panel (3), wherein the method (24) comprises:
receiving (22) an input signal (25) having a piece of information pertaining to a distance and a direction to a destination (30, 23, 33, 72); and
producing (23) a display signal (27),
**characterized in that** the display signal (27) causes a depiction of an arc section (20), covering an angle range (19), on the display panel (3), wherein a magnitude of the angle range (19) corresponds to the information about the distance and a position of a central axis (21) of the angle range (19) corresponds to the information about the direction of the destination (30, 23, 33, 72).

16. Computer program for performing the method (24) according to Claim 15 when the computer program runs on a programmable hardware component.

## Revendications

1. Dispositif de commande (1) permettant un affichage de direction et de distance (64) sur une surface d'affichage (3) ; comportant
un dispositif d'entrée (4) conçu pour recevoir un signal d'entrée (25) contenant une information concernant une distance et une direction par rapport à une destination (30, 23, 33, 72) ; et
un contrôleur (6),
**caractérisé en ce que** le contrôleur est conçu pour générer un signal d'affichage (27) qui provoque une représentation d'une arc de cercle (20) couvrant une certaine plage angulaire (19) sur la surface d'affichage (3), dans lequel une taille de la plage angulaire (19) correspond à l'information concernant la distance et une position d'un axe central (21) de la plage angulaire (19) correspond à l'information concernant la direction de la destination (30, 23, 33, 72).

2. Dispositif de commande (1) selon la revendication 1, dans lequel le contrôleur (6) est conçu pour calculer la taille de la plage angulaire (19) à partir de l'information concernant la distance de la destination (30, 23, 33, 72).

3. Dispositif de commande (1) selon l'une des revendications précédentes, dans lequel l'information concernant la distance est un temps.

4. Dispositif de commande (1) selon l'une des revendications précédentes, dans lequel l'information concernant la distance est un parcours.

5. Dispositif de commande (1) selon l'une des revendications précédentes, dans lequel le contrôleur (6) est conçu pour calculer une position de l'axe central (21) à partir de l'information concernant la direction de la destination (30, 23, 33, 72).

6. Dispositif de commande (1) selon l'une des revendications précédentes, dans lequel le contrôleur (6) est conçu pour générer le signal d'affichage (27) de manière à ce que la plage angulaire (19) soit plus petite à une première distance inférieure à une seconde distance qu'à la seconde distance.

7. Dispositif de commande (1) selon l'une des revendications précédentes, dans lequel le contrôleur (6) est conçu pour générer le signal d'affichage (27) de manière à ce qu'une taille de la plage angulaire (19) soit linéaire par rapport à une distance et à ce qu'une distance maximale corresponde à un angle de 180°.

8. Dispositif de commande (1) selon l'une des revendications 1 à 6, dans lequel le dispositif de commande (6) est conçu pour générer le signal d'affichage (27) de manière à ce qu'une pluralité de distances se situant dans une certaine plage de valeurs correspondent à une plage angulaire (19) d'une certaine taille.

9. Dispositif de commande (1) selon l'une des revendications précédentes, dans lequel le dispositif de commande (6) est conçu pour générer le signal d'affichage (27) de manière à ce que l'arc de cercle (20) soit affiché sur un arrière-plan sur lequel se détache l'arc de cercle (20) .

10. Dispositif de commande (1) selon l'une des revendications précédentes, dans lequel le contrôleur (6) est conçu pour générer le signal d'affichage (27) de manière à ce que l'arrière-plan, dans la plage angulaire (19), soit au moins partiellement représenté différemment qu'à l'extérieur de la plage angulaire (19).

11. Dispositif de commande (1) selon l'une des revendications précédentes, dans lequel le dispositif de commande (6) est conçu pour générer le signal d'affichage (27) de manière à ce que l'arc de cercle (20) soit disposé concentriquement par rapport à un bord extérieur de l'arrière-plan.

12. Dispositif de commande (1) selon l'une des revendications précédentes, dans lequel le dispositif de commande (6) est conçu pour générer le signal d'affichage (27) de manière à ce que l'indication de direction et de distance soit affichée à l'avant de l'arrière-plan d'une partie de carte (31).

13. Système comportant un dispositif de commande (1) selon l'une des revendications précédentes et comprenant en outre : une surface d'affichage (3) qui présente un affichage conforme au signal d'affichage (27) .

14. Système selon la revendication 13, dans lequel le dispositif de commande (1) est conçu pour délivrer un signal de navigation lorsqu'une connexion est établie avec un appareil de navigation embarqué qui provoque la fourniture en sortie d'une navigation vers la destination (32, 72) au moyen de l'appareil de navigation embarqué.

15. Procédé (24) permettant d'afficher un indicateur de direction et de distance (64) sur une surface d'affichage (3), le procédé (24) consistant à :
recevoir (22) un signal d'entrée (25) contenant une information concernant une distance et une direction par rapport à une destination (30, 23, 33, 72) ; et
générer (23) un signal d'affichage (27),
**caractérisé en ce que** le signal d'affichage (27) provoque une représentation d'un arc de cercle (20) couvrant une certaine plage angulaire (19) sur la surface d'affichage (3), dans lequel une taille de la plage angulaire (19) correspond à l'information concernant la distance et une position d'un axe central (21) de la plage angulaire (19) correspond à l'information concernant la direction de la cible (30, 23, 33, 72).

16. Programme d'ordinateur destiné à mettre en oeuvre le procédé (24) selon la revendication 15 lorsque le programme d'ordinateur est exécuté sur un composant matériel programmable.
